# EUROPEAN PATENT APPLICATION

(11) **EP 4 369 445 A1**
(43) Date of publication of application: **15.05.2024**
(21) Application number: 22837372.6
(22) Date of filing: 03.06.2022
(51) Int. Cl.: H01M 8/1004, H01M 8/0273, H01M 8/0286, H01M 8/10

(54) **FUEL CELL COMPOSITE SHEET AND FUEL CELL COMPOSITE SHEET PRODUCTION METHOD**

(30) Priority: 09.07.2021 JP 2021114120
(71) Applicant: NOK Corporation, Minato-ku, Tokyo 105-8585 (JP)
(72) Inventor: MIZUSHIMA, Yoshihide, Fujisawa-shi, Kanagawa 251-0042 (JP); SHIRAKAWA, Sohei, Fujisawa-shi, Kanagawa 251-0042 (JP); KAMIAKA, Koya, Fujisawa-shi, Kanagawa 251-0042 (JP); HASEGAWA, Rai, Fujisawa-shi, Kanagawa 251-0042 (JP)
(74) Representative: Global IP Europe Patentanwaltskanzlei
(86) International application number: PCT/JP2022/022671
(87) International publication number: WO 2023/281953

(57) **Abstract**

It is an object of the present invention to provide a fuel cell composite sheet having high handleability and a method for manufacturing a fuel cell composite sheet. The fuel cell composite sheet includes a frame body (2), a membrane electrode assembly (3) which is disposed in the frame body (2) and which includes a gas diffusion layer, and a holding member (4) as a sheet. The holding member (4) is harder than the frame body (2) and holds the membrane electrode assembly (3). It is possible to prevent warpage by holding the membrane electrode assembly (3) by using the holding member (4). This makes it possible to improve handleability at the time of molding, assembling, and the like.

## Description

### TECHNICAL FIELD

The present invention relates to a fuel cell composite sheet and a method for manufacturing a fuel cell composite sheet.

### BACKGROUND ART

A solid polymer fuel cell includes a membrane electrode assembly (MEA), a gas diffusion layer (GDL), a pair of separators, and a gasket. This fuel cell is configured to generate electricity as being supplied with a hydrogen gas from the anode side and air (oxygen gas) from the cathode side.

There are various types of sealing structures using gaskets, and for example, a sealing structure in which an elastic body of rubber or the like is formed on a frame body extending on an outer peripheral edge of a membrane electrode assembly has been known (see Patent Literature 1). For example, the invention described in Patent Literature 1 is a fuel cell composite sheet including: a frame body (plate); a membrane electrode assembly including a gas diffusion layer; and a gasket provided on the frame body.

In the molding of a gasket, a method that directly compression-molds a gasket on a frame body and a method that bonds a gasket molded in advance to a frame body have been known. The latter bonding method has problems that there is a possibility that gas permeates from an adhesive and the number of steps increases.

### CITATION LIST

### Patent Literature

Patent Literature 1: JP2016-16619A

### SUMMARY OF INVENTION

### Technical Problem

Although the invention according to Patent Literature 1 illustrates a separator made of a metal as the frame body (plate), there is a case where a frame body is formed of a soft film, for example. In such a case, there is a problem that since the fuel cell composite sheet is thin and is easily deformed, handleability decreases in manufacturing steps.

In addition, in a case of manufacturing a gasket by directly compression-molding the gasket on a frame body, there is a problem that a molded body warps due to a change in humidity and causes biting into a molding die and displacement of the gasket. It is understood that this problem occurs because the swelling rate of a membrane electrode assembly including a polymer electrolyte membrane (PEM) is higher than that of a frame body in general. For example, although it is considered that warpage can be prevented by managing humidity inside molding dies at a constant level, it is necessary to set the surrounding of a molded body at a high temperature and in vacuum in compression molding, making the humidity management difficult.

On the other hand, it can also be considered to seal only a polymer electrolyte membrane having high swelling rate. However, there is a problem that since it is necessary to sufficiently separate the position at which to mold a gasket and the polymer electrolyte membrane away from each other, the shape of the product is limited. In addition, although humidity can be managed by using silicone rubber of room temperature vulcanization (RTV) type or the like, there is a problem that such a material has poor mechanical properties or chemical resistance in general.

The present invention has been invented in order to solve such problems, and an object thereof is to provide a fuel cell composite sheet having high handleability and a method for manufacturing a fuel cell composite sheet.

### Solution to Problem

In response to the above-described issues, one or more aspects of the present invention include a frame body, a membrane electrode assembly which is disposed in the frame body and which includes a gas diffusion layer, and a holding member as a sheet. The holding member is harder than the frame body and holds the membrane electrode assembly.

In addition, one or more aspects of the present invention include disposing in a frame body a membrane electrode assembly including a gas diffusion layer and holding the membrane electrode assembly by using a holding member as a sheet. The holding member is harder than the frame body.

According to the present invention, it is possible to prevent warpage by holding the membrane electrode assembly by using the holding member. This makes it possible to improve handleability of a fuel cell composite sheet at the time of molding, assembling, and the like.

In addition, it is preferable that a gasket be disposed on the frame body. In addition, it is preferable to form a gasket on the frame body by compression molding.

According to the present invention, since warpage of the membrane electrode assembly can be prevented even in environments where humidity management is difficult, it is possible to prevent biting into a molding die or displacement of the gasket.

In addition, it is preferable that the holding member be a magnetic body. It is preferable that the magnetic body include: a magnetic sheet; and a metal plate having a magnetic property.

According to the present invention, forming the holding member of a magnetic body makes it possible to prevent the frame body and the membrane electrode assembly from deforming at the time of molding a gasket.

In addition, it is preferable that the magnetic sheet be laminated with a resin.

According to the present invention, it is possible to prevent outgas from being generated from the magnetic sheet due to heat at the time of compression-molding the gasket.

In addition, it is preferable that the holding member include a magnetic body, one of a pair of molding dies includes a magnetic member for a molding die, and the compression molding is conducted while the frame body, the membrane electrode assembly, and the holding member are secured to the one of the pair of molding dies under magnetic force.

According to the present invention, it is possible to prevent displacement due to an impact at the time of molding with the molding die. In addition, since after release from the die, the product remains in the one of the pair of molding dies, it is possible to improve molding cycle time. In addition, at the time of release from the die after molding, it is possible to prevent the product from remaining in another of the pair of molding dies (on the cavity side · an upper die) and the product from falling down.

### Advantageous Effects of Invention

According to the fuel cell composite sheet and the method for manufacturing a fuel cell composite sheet of the present invention, it is possible to enhance handleability.

### BRIEF DESCRIPTION OF DRAWINGS

Fig. 1 is a plan view of a fuel cell composite sheet according to Embodiment 1.
Fig. 2 is a sectional view taken along A-A line in Fig. 1.
Fig. 3 is an exploded perspective view of the fuel cell composite sheet according to Embodiment 1.
Fig. 4 is a sectional view taken along B-B line in Fig. 1.
Fig. 5 is a sectional view showing a step of compression-molding gaskets.
Fig. 6 is a perspective view showing a conventional fuel cell composite sheet.
Fig. 7 is a sectional view showing a conventional molding die.
Fig. 8 is a plan view showing a conventional lower die.
Fig. 9 is a sectional view showing a molding die of Embodiment 2 (a section taken along IX-IX line in Fig. 10).
Fig. 10 is a plan view showing a lower die of Embodiment 2.
Fig. 11 is a sectional view showing a third step of Embodiment 2.

### DESCRIPTION OF EMBODIMENTS

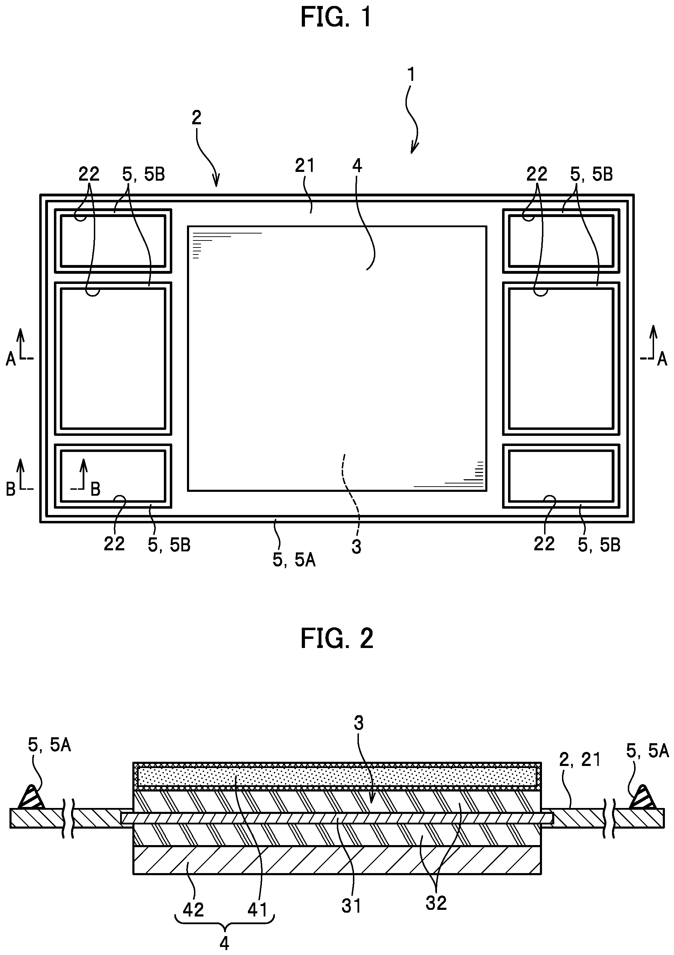

A fuel cell composite sheet and a method for manufacturing a fuel cell composite sheet according to embodiments will be described in detail with reference to the drawings. As shown in Fig. 1, a fuel cell composite sheet 1 includes a frame body 2, a membrane electrode assembly (MEA) 3, a holding member 4, and gaskets 5. A fuel cell is formed by holding the fuel cell composite sheet 1 with a pair of separators (not shown). This fuel cell is configured to generate electricity as being supplied with a hydrogen gas from the anode side and air (oxygen gas) from the cathode side.

In the fuel cell composite sheet 1 and the method for manufacturing a fuel cell composite sheet according to the present embodiments, it is possible to prevent warpage by holding the membrane electrode assembly 3 by using the holding member 4. This makes it possible to improve handleability at the time of molding, assembling, and the like. Hereinafter, Embodiments will be described in detail.

### [Embodiment 1]

The frame body 2 is a film-shaped sheet having a rectangular shape in a plan view as shown in Fig. 1. The frame body 2 is formed of, for example, a resin film such as a PEN (polyethylene terephthalate) film. The shape and material of the frame body 2 are only illustration, and the frame body 2 may be, for example, a metal separator, a carbon separator, or a sub-gasket with a gas diffusion layer, or the like. The frame body 2 includes a frame body 21 and a plurality of through-holes 22 disposed on both sides of the frame body 21. A center portion of the frame body 21 is a portion where the membrane electrode assembly 3 is placed. The shapes, the positions, and the number of the through-holes 22 may be set as appropriate.

As shown in Fig. 2, the membrane electrode assembly (MEA) 3 includes a polymer electrolyte membrane 31 and gas diffusion layers 32, 32. The gas diffusion layers 32, 32 hold the polymer electrolyte membrane 31 from the front surface side and the back surface side. The frame body 21 extends from an outer edge of the polymer electrolyte membrane 31 sideward.

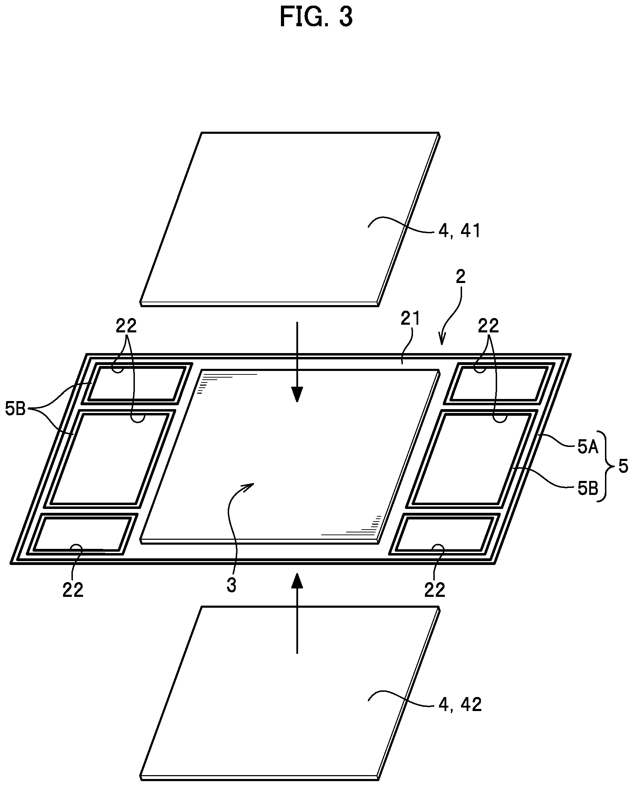

As shown in Fig. 2 and Fig. 3, the holding member 4 is a sheet-like member that holds the membrane electrode assembly 3 from the front surface side and the back surface side. In the present Embodiment, the holding member 4 includes a magnetic sheet 41 and a metal plate 42. The magnetic sheet 41 has a rectangular shape and is arranged to cover the entire front side of the membrane electrode assembly 3. The magnetic sheet 41 is laminated with, for example, a thermoplastic resin film.

The metal plate 42 has a rectangular shape and is arranged to cover the entire back side of the membrane electrode assembly 3. In the present Embodiment, the metal plate 42 is formed of a material having a magnetic property (for example, SUS430). In this way, the magnetic sheet 41 and the metal plate 42 are attracted and attached by magnetic force.

Although the holding member 4 is configured as described above in the present Embodiment, the holding member 4 may have another configuration as long as the holding member 4 is a sheet-like member that is harder than the membrane electrode assembly 3 and has a lower swelling rate than the membrane electrode assembly 3.

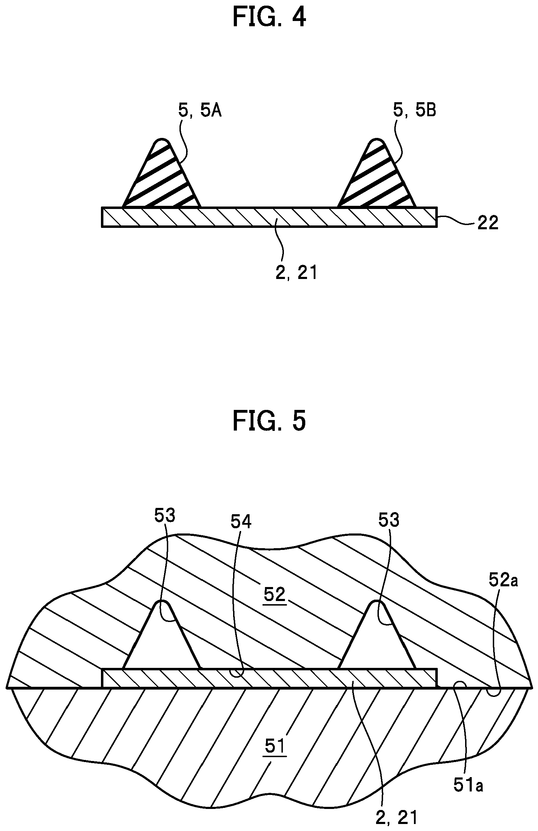

As shown in Fig. 1 and Fig. 4, the gaskets 5 are sealing members formed of an elastic material. The gaskets 5 and a separator (not shown) abut onto each other, so that a sealing region can be formed. In the present Embodiment, the gaskets 5 use silicone rubber (VMQ). Note that the gaskets 5 only have to be formed of a material having elasticity, and for example, ethylene-propylene-diene rubber (EPDM), fluororubber (FKM), polyisobutylene (PIB), a resin, or the like that has a rubber hardness Hs of 45 to 55 may be used.

The gaskets 5 include a first gasket 5A and a plurality of second gaskets 5B. The first gasket 5A is formed endlessly along an outer peripheral edge of the frame body 21. The second gaskets 5B are formed endlessly along outer peripheral edges of the respective through-holes 22 inward of the first gasket 5A. The second gaskets 5B are formed to correspond to the respective through-holes 22. The gaskets 5 may be molded integrally on the frame body 21 by compression molding, or the gaskets 5 molded in advance may be bonded to the frame body 21 with an adhesive.

Next, the method for manufacturing a fuel cell composite sheet of the present Embodiment will be described. In the method for manufacturing a fuel cell composite sheet of the present Embodiment, a first step, a second step, and a third step are conducted.

The first step is a step of disposing, in the frame body 2, the membrane electrode assembly 3 including the gas diffusion layer 32. In the present Embodiment, the membrane electrode assembly 3 is bonded to and integrally molded on the center portion of the frame body 2.

The second step is a step of holding the membrane electrode assembly 3 by using the holding member 4. In the present Embodiment, the membrane electrode assembly 3 is held by disposing the magnetic sheet 41 on the front surface (upper surface) of the membrane electrode assembly 3 and disposing the metal plate 42 on the back surface (lower surface) of the membrane electrode assembly 3.

The third step is a step of forming the gaskets 5. In the present Embodiment, the gaskets 5 are integrally molded by compression molding. As shown in Fig. 5, in the third step, a first molding die 51 and a second molding die 52 are used. The first molding die 51 is a flat end surface 51a. The second molding die 52 includes a flat end surface 52a, recess portions 53, 53, and an abutting surface 54. The abutting surface 54 is a surface that comes into contact with the frame body 2 at the time of molding.

In the third step, the frame body 2 is held by the end surface 51a of the first molding die 51 and the end surface 52a and the abutting surface 54 of the second molding die 52. In this way, cavities surrounded by the recess portions 53, 53 and the frame body 2 are formed. By pouring a material into the cavities, followed by heating and pressurizing for a predetermined time, the gaskets 5 are formed integrally on the frame body 2. The fuel cell composite sheet 1 is formed by the above-described steps.

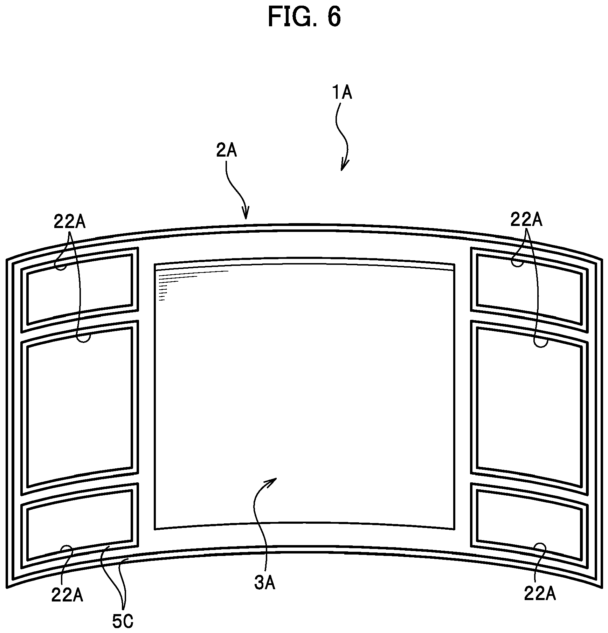

Here, Fig. 6 is a perspective view showing a conventional fuel cell composite sheet 1A. The conventional fuel cell composite sheet 1A includes a film-shaped frame body 2A, a membrane electrode assembly 3A, and gaskets 5C. The gaskets 5C are disposed around through-holes 22A as well. Since the frame body 2A is formed of a film, the conventional fuel cell composite sheet 1A is easily bent. For this reason, there is a problem that the conventional fuel cell composite sheet 1A is difficult to handle at the time of transporting, molding, assembling, and the like. In addition, there is a problem that since the conventional fuel cell composite sheet 1A warps due to a change in humidity at the time of compression molding and causes biting into a molding die and displacement of the gaskets 5C.

In this regard, according to the present Embodiment, it is possible to prevent warpage by holding the membrane electrode assembly 3 by using the holding member 4. This makes it possible to improve handleability at the time of transporting, molding, assembling, and the like.

In addition, since warpage of the membrane electrode assembly 3 can be prevented even in environments where humidity management is difficult like that of compression molding, it is possible to prevent binging into a molding die or displacement of the gaskets 5.

In addition, it is preferable that the holding member 4 be a magnetic body like the present Embodiment. More specifically, it is preferable that the magnetic body include: the magnetic sheet 41; and the metal plate 42 having a magnetic property. If the holding member 4 were formed of a pair of plate-shaped members having no magnetic property, warpage and deformation would occur in the course of being inserted at the time of compression-molding the gaskets 5. However, since the frame body 2 and the membrane electrode assembly 3 are held while the magnetic sheet 41 and the metal plate 42 are attracted and attached by magnetic force by forming the holding member 4 of the present Embodiment with a magnetic body, it is possible to prevent the frame body 2 and the membrane electrode assembly 3 from deforming at the time of compression-molding the gaskets 5.

In addition, it is preferable that the magnetic sheet 41 be laminated with a resin. This makes it possible to prevent outgas from being generated from the magnetic sheet 41 due to heat at the time of compression-molding the gaskets 5.

### [Embodiment 2]

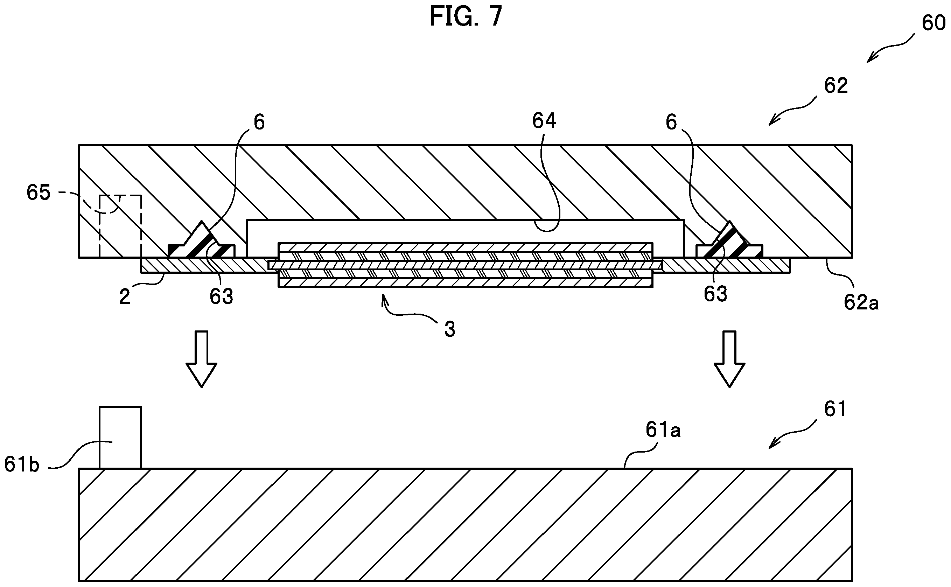

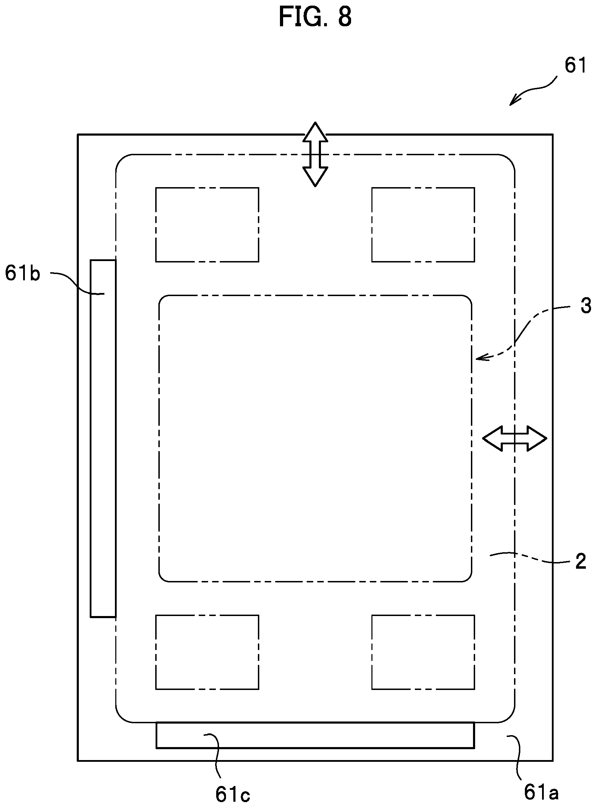

Next, a method for manufacturing a fuel cell composite sheet according to Embodiment 2 will be described. First, problems in the case of using a conventional molding die will be described. Fig. 7 is a sectional view showing a conventional molding die. Fig. 8 is a plan view showing a conventional lower die.

As shown in Fig. 7 and Fig. 8, a conventional molding die 60 includes a first molding die (lower die) 61 and a second molding die (upper die) 62. The first molding die 61 has positioning portions 61b, 61c formed on a peripheral edge portion of a flat end surface 61a. The positioning portions 61b, 61c each take a cuboid and are arranged at positions perpendicular to each other.

The second molding die 62 has recess portions 63, a first housing recess portion 64, and a second housing recess portion 65 in a flat end surface 62a. The recess portions 63 are spaces in which to mold gaskets 6. The first housing recess portion 64 is a space in which to house a membrane electrode assembly 3 at the time of molding. The second housing recess portion 65 is a space in which to house the positioning portion 61b at the time of molding. The molding die 60 is configured to compression-mold the gaskets 6 by pouring a material into the recess portions 63 while holding the frame body 2 with the first molding die 61 and the second molding die 62. As shown in Fig. 8, at the time of molding, the frame body 2 can be positioned relative to the first molding die 61 by causing the frame body 2 to abut on the positioning portions 61b, 61c.

However, in the case of molding the gaskets 6 by directly conducting compression-molding the gaskets 6 on the frame body 2 like the conventional molding die 60, there is a problem that the positions of the frame body 2 and the molding die 60 displace due to an impact of an operation such as sliding or clamping of the molding die 60 (see open arrows in Fig. 8). It has conventionally been a general practice to make the positioning by using the positioning portions 61b, 61c, positioning pins (not shown), or the like, but there is also a possibility that a product remains in the second molding die 62 (upper die) at the time of releasing the dies after molding gaskets. If a product remains in the second molding die 62, it is cumbersome to remove the product. In addition, if a product remains in the second molding die 62 (upper die) at the time of releasing the dies after molding gaskets, there is also a possibility that the product falls down and is broken as shown by open arrows in Fig. 7. In view of this, the second Embodiment aims at preventing displacements of the frame body 2 and the like.

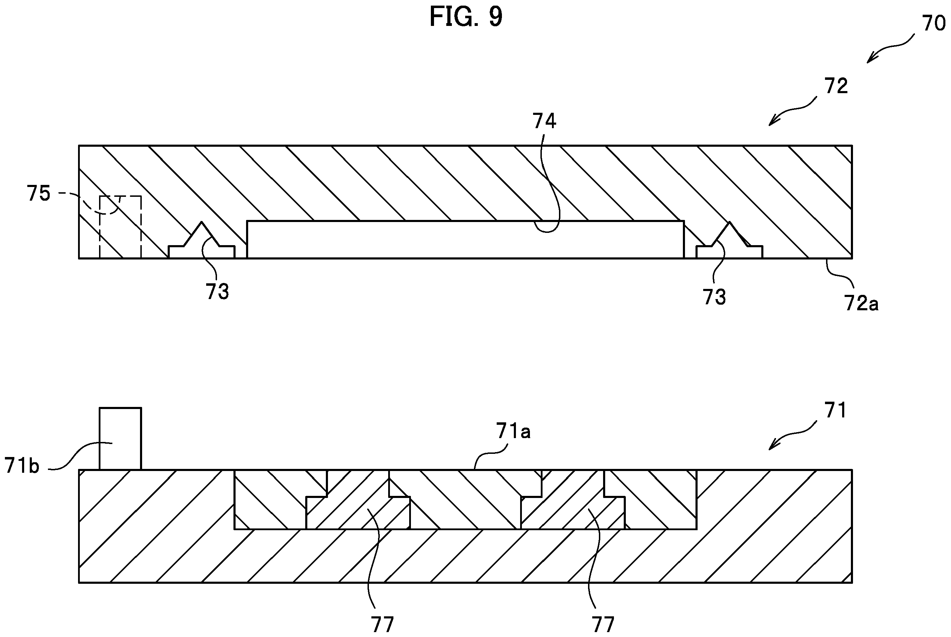

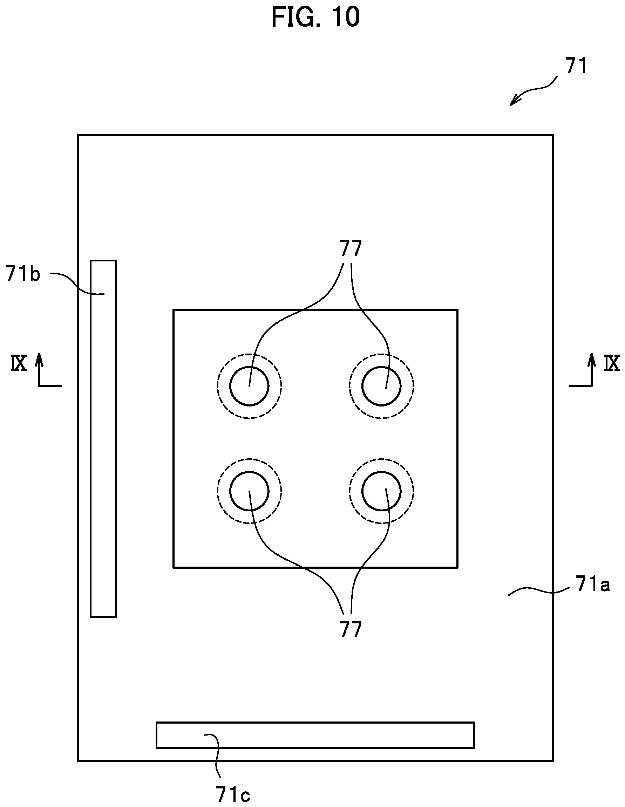

Fig. 9 is a sectional view showing a molding die of Embodiment 2. Fig. 10 is a plan view showing a lower die of Embodiment 2. As shown in Fig. 9 and Fig. 10, the molding die 70 according to Embodiment 2 includes a first molding die (lower die) 71 and a second molding die (upper die) 72. The first molding die 71 has positioning portions 71b, 71c formed on an end surface 71a, which serves as a molding surface. As shown in Fig. 10, the positioning portions 71b, 71c are arranged at positions perpendicular to each other. In addition, inside the first molding die 71, a plurality of magnetic members for a molding die 77 are disposed. The magnetic members for a molding die 77 are, for example, magnets. The magnetic members for a molding die 77 are flush with the end surface 71a or disposed inside the end surface 71a.

The second molding die (upper die) 72 is movable relative to the first molding die 71. In an end surface 72a, which serves as a molding surface, of the second molding die 72, recess portions 73, a first housing recess portion 74, and a second housing recess portion 75 are formed. The recess portions 73 are spaces in which to mold gaskets. The first housing recess portion 74 is a space in which to house the membrane electrode assembly 3 at the time of molding. The second housing recess portions 75 are spaces which are disposed at positions corresponding to the positioning portions 61b, and in which to house the positioning portion 61b at the time of molding. In addition, although specific illustration is omitted, in the second molding die 72, a second housing recess portion in which to house the positioning portion 71c is also disposed. The molding die 70 is configured to compression-mold the gaskets by pouring a material into the recess portions 73 while holding the frame body 2 with the first molding die 71 and the second molding die 72.

Next, the method for manufacturing a fuel cell composite sheet of the present Embodiment will be described. In the method for manufacturing a fuel cell composite sheet of the present Embodiment, a first step, a second step, and a third step are conducted. The first step and the second step are the same as those of Embodiment 1. In the second step, the magnetic sheet 41 and the metal plate 42 as the holding member 4 are disposed on both surfaces of a sub-gasket with MEA.GDL (gas diffusion layer). Note that this molded article is referred to as an "intermediate body X".

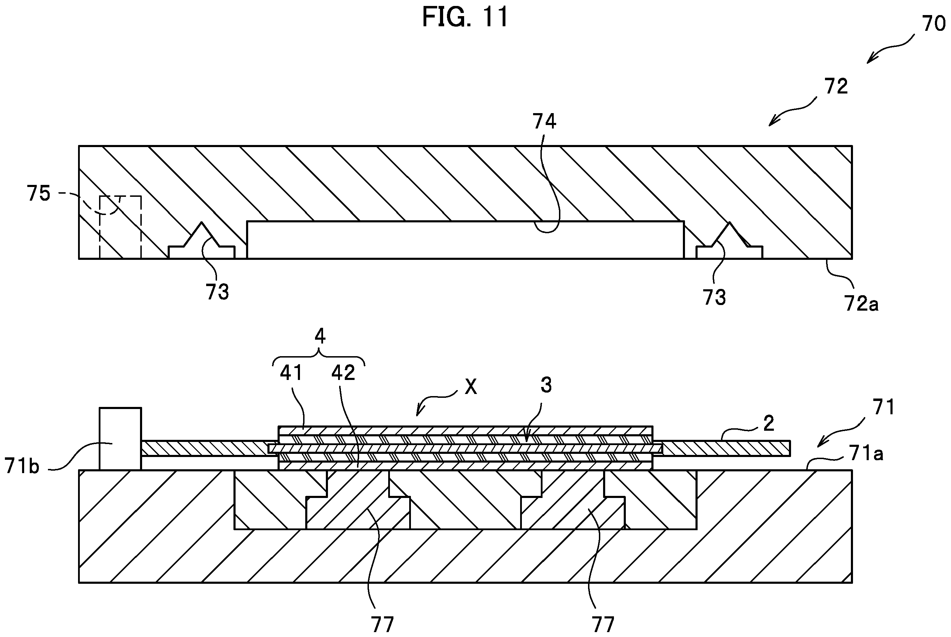

The third step is a step of forming gaskets. In the present Embodiment, the gaskets are integrally molded by compression molding. As shown in Fig. 11, in the third step, the intermediate body X is disposed on the end surface 71a of the first molding die 71.

Since the holding member 4 is formed of the magnetic sheet 41 and the metal plate 42, once the intermediate body X is disposed on the first molding die 71, the intermediate body X is secured to be immovable by the magnetic force of the magnetic member for a molding die 77. Next, the first molding die 71 and the second molding die 72 are brought closer to each other to hold the frame body 2 between the end surfaces 71a, 72a. In this way, cavities are formed by the frame body 2 and the recess portions 73. By pouring a material into the cavities, followed by heating and pressurizing for a predetermined time, the gaskets are formed integrally on the frame body 2.

According to the method for manufacturing a fuel cell composite sheet according to Embodiment 2 described above, since the first molding die 71 includes the magnetic member for a molding die 77, it is possible to prevent displacement of the intermediate body X due to an impact at the time of molding with the molding die 70 by means of the magnetic force. In addition, after releasing the die, the product remains as it is in one of the molding dies (first molding die 71). This eliminates a work of removing the product from the second molding die 72 unlike the conventional techniques, and thus making it possible to improve the molding cycle time. In addition, at the time of releasing the die after molding, it is possible to prevent the product from remaining in the second molding die 72 (another of the molding dies) and the product from falling down.

Although Embodiments have been described above, changes in design are possible as appropriate.

### Reference Signs List

- 1: fuel cell composite sheet
- 2: frame body
- 3: membrane electrode assembly
- 4: holding member
- 5: gasket
- 21: frame body
- 22: through-hole
- 31: polymer electrolyte membrane
- 32: gas diffusion layer
- 41: magnetic sheet
- 42: metal plate
- 70: molding die
- 71: first molding die (lower die)
- 72: second molding die (upper die)
- 77: magnetic member for a molding die

## Claims

1. A fuel cell composite sheet comprising:
a frame body;
a membrane electrode assembly which is disposed in the frame body and which includes a gas diffusion layer; and
a holding member as a sheet, the holding member being harder than the frame body and holding the membrane electrode assembly.

2. The fuel cell composite sheet according to claim 1 further comprising:
a gasket disposed on the frame body.

3. The fuel cell composite sheet according to claim 1 or 2, wherein the holding member is a magnetic body.

4. The fuel cell composite sheet according to claim 3, wherein the magnetic body includes: a magnetic sheet; and a metal plate having a magnetic property.

5. The fuel cell composite sheet according to claim 4, wherein the magnetic sheet is laminated with a resin.

6. A method for manufacturing a fuel cell composite sheet, the method comprising:
disposing in a frame body a membrane electrode assembly including a gas diffusion layer; and
holding the membrane electrode assembly by using a holding member as a sheet, the holding member being harder than the frame body.

7. The method for manufacturing a fuel cell composite sheet according to claim 6, the method further comprising:
forming a gasket on the frame body by compression molding.

8. The method for manufacturing a fuel cell composite sheet according to claim 7, wherein the holding member includes: a magnetic body,
wherein one of a pair of molding dies includes a magnetic member for a molding die, and
wherein the compression molding is conducted while the frame body, the membrane electrode assembly, and the holding member are secured to the one of the pair of molding dies under magnetic force.

9. The method for manufacturing a fuel cell composite sheet according to claim 8, wherein
the magnetic body includes: a magnetic sheet; and a metal plate having a magnetic property.
